# EUROPÄISCHE PATENTANMELDUNG

(11) **EP 1 742 329 A1**
(43) Veröffentlichungstag der Anmeldung: **10.01.2007**
(21) Anmeldenummer: 05014885.7
(22) Anmeldetag: 08.07.2005
(51) Int. Cl.: H02K 3/28

(54) **Ständerteil eines Turbogenerators und Turbogenerator**

(71) Anmelder: SIEMENS AKTIENGESELLSCHAFT, 80333 München (DE)
(72) Erfinder: Kowalski, Waldemar, 45472 Mülheim an der Ruhr (DE); Lehmann, Christoph, Dr., 47506 Neukirchen-Vluyn (DE); Pohlmann, Friedhelm, Dr., 45355 Essen (DE); Spiess, Karlheinz, 47445 Moers (DE)

(57) **Zusammenfassung**

Ein Ständerteil (5) eines Turbogenerators (1) weist ein Ständeraktivteil (17) auf, das einen ferromagnetischen Hohlkörper (19) und Ständerleiter (18) aufweist. Außerdem weist ein Ständerteil (5) eines Turbogenerators (1) einen Ständerwickelkopf (21', 21") auf, in dem die Ständerleiter (18) verschaltet sind. Um eine platzsparendere und stabilere Bauweise eines Ständerteils (5) zu ermöglichen, sieht die Erfindung bei dem Ständerteil (5) einen ersten Ständerwickelkopf (21') an einem ersten stirnseitigen Ende des Ständerteils (5) vor und einen zweiten Ständerwickelkopf (21'') an einem zweiten stirnseitigen Ende des Ständerteils (5) vor, wobei der erste Ständerwickelkopf (21') eine geschlossene Parallelverschaltung aller Leiter einer Wicklungsanordnung (16) der Ständerwicklung aufweist und der zweite Ständerwickelkopf (21") eine offene Parallelverschaltung aller Leiter einer Wicklungsanordnung (16) der Ständerwicklung aufweist und Anschlüsse zur Leistungsabnahme aufweist.

## Beschreibung

Die Erfindung betrifft ein Ständerteil eines Turbogenerators, mit einem Ständeraktivteil, das einen ferromagnetischen Hohlkörper und Ständerleiter aufweist, und mit einem Ständerwickelkopf. Die Erfindung betrifft auch einen Turbogenerator.

Ein Turbogenerator ist eine von einer Turbine angetriebene elektrische Maschine zur Erzeugung von Strom. Turbogeneratoren können heutzutage Leistungen zwischen 100 MW und 1500 MW erzeugen. Üblicherweise weist ein Turbogenerator ein Ständerteil und einen im Ständerteil drehbar gelagerten und von der Turbine antreibbaren Läufer auf. Ein magnetisches Feld wird üblicherweise mit einer strombeaufschlagten Läuferwicklung auf dem Läufer erzeugt, das oftmals ein einziges Polpaar aufweist. Darüber hinaus sind Läuferwicklungen auch mit zwei oder drei Polpaaren möglich. Auf diese Weise induziert ein magnetisches Drehfeld einen Strom in elektrischen Ständerleitern des Ständerteils. Das Turbogeneratorständerteil weist ein Ständergehäuse und ein Ständeraktivteil auf, das einen ferromagnetischen Hohlkörper und Ständerleiter als Teile einer Ständerwicklung und eines Schaltleitungsverbandes zur Erzeugung von ein-, zwei-, drei- oder mehrphasigem Strom aufweist. Der ferromagnetische Hohlkörper ist in der Regel durch das so genannte Ständerblechpaket gebildet, in das die Ständerwicklung eingelegt ist. Die Strombeaufschlagung der Ständerwicklung wird in der Regel über den potential gesteuerten Schaltleitungsverband bewerkstelligt.

Die in der Regel in Form von Stäben ausgebildeten Ständerleiter treten üblicherweise an einem stirnseitigen Endteil des Ständeraktivteils aus, sind abgebogen und auf einer Kegeloberfläche zusammengeführt und derart miteinander verschaltet, dass pro Polpaar und Phase des Turbogenerators eine Wicklungsanordnung, beispielsweise in Form einer Spulenanordnung, gebildet ist, in die bei Drehung des Läufers ein Strom induzierbar ist. Die Verschaltung der Ständerleiter erfolgt im so genannten Wickelkopf, der bei üblichen Ausführungen eines Turbogenerators nicht Teil des Ständeraktivteils ist.

Die Verschaltung der Ständerleiter erfolgt in Kombination mit Versteifungs- und Stützelementen am Wickelkopf. Diese Maßnahme ist je nach Anzahl der Polpaare und Phasenzahl des Turbogenerators aufwendig und benötigt aufgrund der üblichen Kegelform des Ständerwickelkopfes, z. B. bei Generatoren im Bereich von 100 MW bis 1500 MW einen Platzbedarf, der etwa 1 m bis 2 m der axialen Länge eines Turbogenerators ausmacht. Darüber hinaus hat sich gezeigt, dass die oben erläuterte Konstruktion bei einem Ständerwickelkopf nicht nur eine zeit- und kostenintensive Fertigung erfordert, sondern im Betriebsfall eines Turbogenerators in der Regel auch hohen Kraft- und Schwingungsbelastungen aufgrund der auftretenden Strom- und Magnetkräfte ausgesetzt ist. Insbesondere in Störfällen oder in transienten Betriebsbereichen eines Turbogenerators erweisen sich die auf einen Ständerwickelkopf wirkenden Schwingungsanregungen als besonders nachteilig.

Wünschenswert wäre eine gleichzeitig betriebssichere, einfachere und Raum sparende Möglichkeit, Ständerleiter einer Ständerwicklung oder eines Schaltungleitungsverbandes unter Vermeidung der oben genannten Probleme zu verschalten.

An dieser Stelle setzt die Erfindung an, deren Aufgabe es ist, eine Vorrichtung anzugeben, bei der eine gleichzeitig betriebssichere und Raum sparende Verschaltung von Ständerleitern gegeben ist.

Betreffend die Vorrichtung wird die Aufgabe durch die Erfindung mit einem eingangs genannten Ständerteil gelöst, das erfindungsgemäß einen ersten Ständerwickelkopf an einem ersten stirnseitigen Ende des Ständerteils aufweist und einen zweiten Ständerwickelkopf an einem zweiten stirnseitigen Ende des Ständerteils aufweist, wobei der erste Ständerwickelkopf eine geschlossene Parallelverschaltung aller Leiter einer Wicklungsanordnung der Ständerwicklung aufweist und der zweite Ständerwickelkopf eine offene Parallelverschaltung aller Leiter einer Wicklungsanordnung der Ständerwicklung aufweist und Anschlüsse zur Leistungsabnahme aufweist.

Unter einer Wicklungsanordnung ist dabei ein sich insbesondere in der Ausdehnung des ferromagnetischen Hohlkörpers erstreckender Wicklungsverlauf von Ständerleitern zu verstehen, die praktisch eine spulenartige Wicklungsanordnung bilden.

Die Erfindung geht von der Überlegung aus, dass eine aufwändige Verschaltung von Ständerleitern einer Wicklungsanordnung im Prinzip überflüssig ist. Vielmehr hat die Erfindung erkannt, dass sich ein induzierter Strom in der Wicklungsanordnung so einstellt, dass eine geschlossene Parallelverschaltung aller Ständerleiter in einem ersten Ständerwickelkopf und eine offene Parallelverschaltung aller Ständerleiter in einem zweiten Ständerwickelkopf ausreicht, um an Anschlüssen zur Leistungsabnahme eine ausreichende resultierende Leistung abnehmen zu können. Mit anderen Worten, die Erfindung hat erkannt, dass eine Reihenschaltung von Ständerleitern einer Wicklungsanordnung im Prinzip überflüssig ist. Vielmehr ist eine Parallelverschaltung ausreichend.

Dies hat den Vorteil, dass der Ständerwickelkopf in einer wesentlich kompakteren und eine bessere mechanische Stabilität aufweisenden Konstruktion ausgeführt werden kann. Auf diese Weise kann das Ständerteil insbesondere auch in einer axial verkürzten Bauweise ausgeführt werden.

Vorteilhafte Weiterbildungen der Erfindung sind den Unteransprüchen zu entnehmen und geben im Einzelnen vorteilhafte Möglichkeiten an, ein Ständerteil im Rahmen des neuen Konzepts hinsichtlich weiterer Vorteile auszubilden.

In einer besonders bevorzugten Weiterbildung ist der erste Ständerwickelkopf in Form eines leitenden und geschlossenen Ringelements gebildet. Dies ist eine besonders einfache und gleichzeitig stabile und leicht zu kühlende Ausführung einer Parallelverschaltung aller Ständerleiter einer Wicklungsanordnung.

Der Ring kann in seiner mechanischen Integrität insbesondere gegenüber Schwingungsanregungen und Stromkräften ausreichend massiv ausgeführt sein, so dass im Betrieb oder selbst in Störfällen eine ungewollte Vibration des Ständerwickelkopfes sicher vermieden ist.

In einer weiteren bevorzugten Weiterbildung ist der zweite Ständerwickelkopf in Form eines leitenden und offenen Ringsegments gebildet. Die offenen Enden des Ringsegments werden vorzugsweise als Anschlüsse zur Leistungsabnahme mit einer Zuleitung zu einer Stromdurchführung verbunden.

Die Erfindung führt auch auf einen Turbogenerator mit einem Gehäuse und einem in dem Gehäuse angeordneten Ständerteil gemäß dem neuen Konzept sowie einem im Ständerteil angeordneten Läufer.

Ein solches Generatorkonzept zeichnet sich aufgrund der Parallelverschaltung aller Ständerleiter einer Wicklungsanordnung als besonders geeignet für niedrigere Spannungsbereiche, im Vergleich zu üblichen Generatoren, aus. Besonders zu bevorzugen ist eine Anwendung im Leistungsbereich unterhalb von 1000 MW. Der Anschluss eines Turbogenerators gemäß dem neuen Konzept an ein Netz kann vorzugsweise durch einen Umrichter erfolgen, der im niedrigeren Spannungsbereich vorteilhafter arbeitet als Umrichter in höheren Spannungsbereichen.

Darüber hinaus eignet sich das hier vorgestellte Generatorkonzept besonders gut für Generatoren mit hohen Drehzahlen und entsprechend hohen Frequenzen, die über statische Umformer z. B. an ein 50 Hz oder 60 Hz Netz angeschlossen werden können. Es hat sich nämlich gezeigt, dass sich ein Ständerteil eines Turbogenerators der oben erläuterten Art besonders gut kühlen lässt bzw. derart vereinfacht konstruieren lässt, dass ein Ständerwickelkopf im Vergleich zu üblichen Ständerwickelköpfen eine bessere Wärmeabfuhr aufweist.

Gemäß einer Weiterbildung weist der Turbogenerator einen zwei-, vier- oder sechspoligen Läufer auf und eine Drei-Phasen-Ständerwicklung.

Dabei ist pro Polpaar des Läufers und pro Phase des Ständers eine Wicklungsanordnung mit zweckmäßiger Orientierung als Teil der Ständerwicklung vorgesehen. Beispielsweise weist ein zweipoliger Turbogenerator zur Erzeugung von Drei-Phasen-Drehstrom drei Wicklungsanordnungen als Teil der Ständerwicklung auf. Im Falle eines vierpoligen Läufers eines Turbogenerators zur Erzeugung von Drei-Phasen-Drehstrom sind sechs Wicklungsanordnungen vorgesehen. Bei einem Turbogenerator mit einem sechspoligen Läufer zur Erzeugung von Drei-Phasen-Drehstrom sind neun Wicklungsanordnungen als Teil einer Ständerwicklung vorgesehen. Die Wicklungsanordnungen sind jeweils in Bezug auf ein Polpaar in der Ständerwicklung zweckmäßig geometrisch zueinander angeordnet.

Vorzugsweise ist jeder Wicklungsanordnung jeweils ein erster und zweiter Ständerwickelkopf zugeordnet.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Im Einzelnen zeigt die Zeichnung in:
- FIG 1: eine dreidimensional perspektivische Schemaansicht eines Turbogenerators gemäß einer bevorzugten Ausführungsform;
- FIG 2: eine dreidimensionale perspektivische Schemaansicht eines Ständerteils eines Turbogenerators mit einem Ständeraktivteil und einem Ständerwickelkopf gemäß einer bevorzugten Ausführungsform.

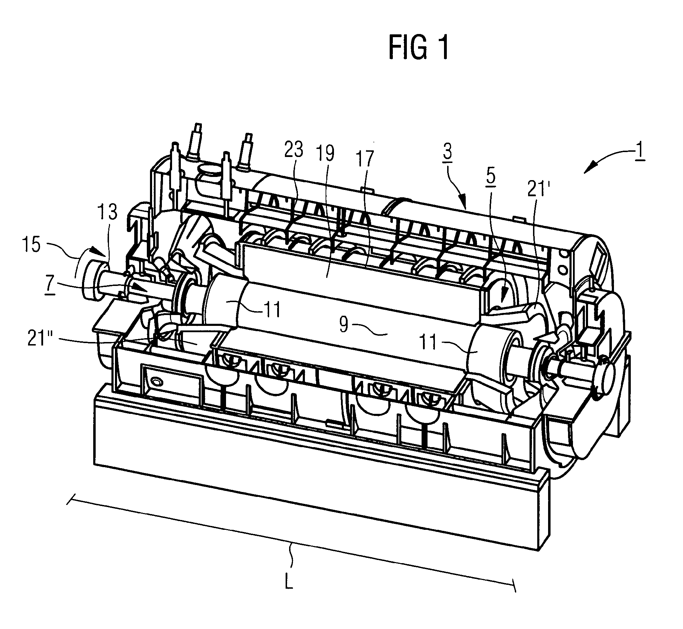

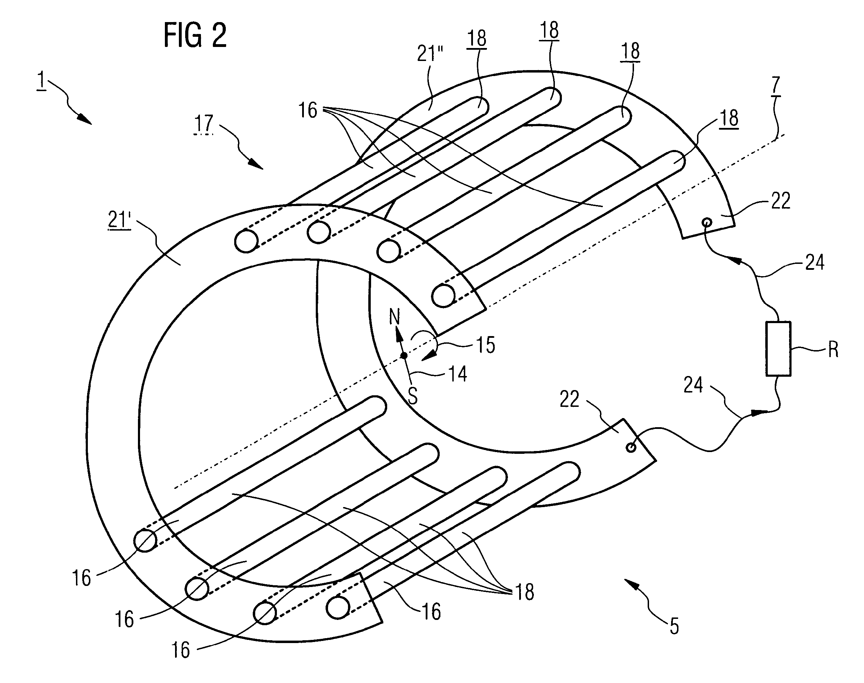

FIG 1 zeigt einen Turbogenerator 1 mit einem Gehäuse 3 sowie einem in dem Gehäuse 3 angeordneten Ständerteil 5 und einem im Ständerteil drehbar angeordneten Läufer 7. Der Läufer weist ein Aktivteil 9 auf, das eine nicht näher gezeigte Läuferwicklung aufweist zur Darstellung eines in dieser Ausführungsform zweipoligen, gegebenenfalls in anderen Ausführungsformen auch vierpoligen oder sechspoligen Magnetfeldes. Das Läuferaktivteil ist durch zwei Läuferkappen 11 begrenzt und zusammen mit dem Läuferaktivteil 9 auf der Läuferwelle 13 gelagert. Der über eine Turbine in Drehbewegung 15 versetzbare Läufer 7 erzeugt somit ein in FIG 2 symbolisch dargestelltes magnetisches Drehfeld 14, das die in FIG 2 näher dargestellten Ständerleiter 18 des Ständers 5 mit einem variablen magnetischen Fluss durchsetzt, so dass in den Ständerleitern nach dem Induktionsgesetz ein Strom induziert wird. Der Ständer 5 weist dazu ein Ständeraktivteil 17 auf, das u. a. aus einem ferromagnetischen Hohlkörper 19 in Form eines Blechpakets gebildet ist. In das den ferromagnetischen Hohlkörper 19 bildende Blechpaket sind die in FIG 2 näher dargestellten Ständerleiter 18 als Teil in Form einer Ständerwicklung mit einem angeschlossenen Schaltleitungsverband eingelegt. Die Ständerwicklung im Blechpaket weist bei dem vorliegenden zweipoligen zur Erzeugung von Drei-Phasen-Drehstrom ausgelegten Turbogenerator 1 drei Wicklungsanordnungen auf, die praktisch jeweils eine Spule bilden. Das heißt, die Ständerwicklung ist vorliegend in Form einer Drei-Phasen-Drehstromwicklung gebildet, die zu einem Stern geschaltet ist. Dabei bilden drei Enden der drei Wicklungsanordnungen jeweils eine Phase. Drei weitere Enden der drei Wicklungsanordnungen sind in einem Sternpunkt zum Nullleiter verschaltet.

Bei der in FIG 1 dargestellten bevorzugten Ausführungsform eines Turbogenerators 1 erfolgt die Verschaltung der in FIG 2 näher dargestellten Ständerleiter in Wickelköpfen 21', 21", die jeweils an einem stirnseitigen Ende des Ständerteils 5 direkt angrenzend zum Ständeraktivteil 17 angeordnet sind. Die Ständerwickelköpfe 21', 21" sind in FIG 1 nur symbolisch dargestellt und zählen nicht mehr zum aktiven Teil des Turbogenerators 1. Die Ständerleiter 18 sind in Form von Stäben gebildet, die im Ständerwickelkopf 21', 21" verschaltet werden.

Bei Ausführungen des Standes der Technik treten solche Stäbe aus dem Ständeraktivteil aus, werden auf einer Kegeloberfläche abgebogen und zusammengeführt und zur Bildung der oben beschriebenen spulenartigen Wicklungsanordnungen verschaltet. Ein Ständerwickelkopf ist damit je nach Anzahl der Polpaare des Läuferaktivteils und je nach Anzahl der durch das Ständeraktivteil gebildeten Phasen entsprechend aufwendig. Der Platzbedarf bei Generatoren im Bereich von 100 MW bis 1500 MW liegt durchaus bei 1 m bis 2 m der gesamten axialen Länge L des Turbogenerators.

FIG 2 zeigt schematisch den in FIG 1 dargestellten Turbogenerator 1 gemäß der bevorzugten Ausführungsform mit einem schematisch dargestellten Läufer 7, der in seiner Drehbewegung 15 ein magnetisches Drehfeld 14 mit einem Polpaar erzeugt.

Dem Polpaar zugeordnet ist eine entsprechende Wicklungsanordnung 16 als Teil einer nicht näher dargestellten Ständerwicklung eines Ständeraktivteils 17, das mit einem ersten Ständerwickelkopf 21' an einem ersten stirnseitigen Ende des Ständerteils 5 und einem zweiten Ständerwickelkopf 21'' an einem zweiten stirnseitigen Ende des Ständerteils 5 angeschlossen ist.

Die Wicklungsanordnung der FIG 2 ist in Form zweier sich gegenüber liegenden Anordnungen von jeweils vier Ständerleitern 18 in Form von Leiterstäben gebildet. Diese Art der Wicklungsanordnung 16 hat sich bei der in FIG 2 dargestellten bevorzugten Ausführungsform als besonders zweckmäßig erwiesen.

Es sollte dennoch klar sein, dass im Hinblick auf andere Ausführungsformen andere zweckmäßige Wicklungsanordnungen als die Wicklungsanordnung 16 gewählt werden können. Insbesondere kann je nach Anzahl der Phasen oder Anzahl der Pole des magnetischen Drehfeldes eine Mehrzahl von Wicklungsanordnungen 16 mit entsprechenden Ständerwickelköpfen 21', 21'' zur Bildung eines Ständeraktivteils vorgesehen sein. Dazu sind die Wicklungsanordnungen 16 in einem zweckmäßigen Winkel zueinander verdreht.

Der Ständerwickelkopf 21' ist in Form eines leitenden und geschlossenen Ringelements gebildet, das auf diese Weise eine geschlossene Parallelverschaltung aller Ständerleiter 18 der Wicklungsanordung 16 der Ständerwicklung aufweist.

Der zweite Ständerwickelkopf 21'' ist in Form eines leitenden und offenen Ringsegments gebildet, das an seinen offenen Enden 22 Anschlüsse zur Leistungsabgabe aufweist, die mit einer Zuleitung 24 zu einer Stromdurchführung verbunden sind. Der in der Wicklungsanordnung 16 generierte Strom I kann somit in das durch den symbolischen Widerstand R dargestellte Netz abgegeben werden. Für jede spulenartige Wicklungsanordnung werden zwei Enden der Ständerleitungen zur Leistungsabnahme über so genannte in FIG 1 gezeigte Stromdurchführungen 23 und ein Leitungsterminal zur Abgabe der im Turbogenerator 1 generierten Leistung nach außen, gegebenenfalls über einen Transformator oder einen Umformer, an ein nicht näher dargestelltes Netz gegeben.

Ein hier dargestellter Wickelkopf 21' und 21'' erweist sich gegenüber üblichen auf einer Kegeloberfläche ausgeführten Ständerwickelköpfen als besonders raumsparend und stabil gegenüber Schwingungsanregungen und Stromkräften.

Zur Kühlung kann insbesondere ein als Ringelement oder Ringsegment ausgebildeter Ständerwickelkopf 21', 21'' bei Bedarf direkt gekühlt werden, indem das Ringsegment oder das Ringelement mit Kühlbohrungen oder Kühlschlitzen versehen wird, so dass das Ringelement oder Ringsegment von innen kühlbar ist. Üblicherweise können Ständerwickelköpfe nur indirekt durch Anströmen mit einem Kühlluftstrom gekühlt werden.

Zusammenfassend weist ein Ständerteil 5 eines Turbogenerators 1 ein Ständeraktivteil 17 auf, das einen ferromagnetischen Hohlkörper 19 und Ständerleiter 18 als Teil einer Ständerwicklung und einem Schaltleitungsverband aufweist. Außerdem weist ein Ständerteil 5 eines Turbogenerators 1 einen Ständerwickelkopf 21', 21'' auf, in dem die Ständerleiter 18 verschaltet sind. Um eine platzsparendere und stabilere Bauweise eines Ständerteils 5 zu ermöglichen, sieht die Erfindung bei dem Ständerteil 5 einen ersten Ständerwickelkopf 21' an einem ersten stirnseitigen Ende des Ständerteils 5 vor und einen zweiten Ständerwickelkopf 21'' an einem zweiten stirnseitigen Ende des Ständerteils 5 vor, wobei der erste Ständerwickelkopf 21' eine geschlossene Parallelverschaltung aller Leiter einer Wicklungsanordnung 16 der Ständerwicklung aufweist und der zweite Ständerwickelkopf 21'' eine offene Parallelverschaltung aller Leiter einer Wicklungsanordnung 16 der Ständerwicklung aufweist und Anschlüsse zur Leistungsabnahme aufweist.

## Patentansprüche

1. Ständerteil (5) eines Turbogenerators (1),
mit einem Ständeraktivteil (9),
das einen ferromagnetischen Hohlkörper (19) und Ständerleiter (18) aufweist,
und mit einem Ständerwickelkopf (21', 21''),
**gekennzeichnet durch**
- einen ersten Ständerwickelkopf (21') an einem ersten stirnseitigen Ende des Ständerteils (5) und
- einen zweiten Ständerwickelkopf (21'') an einem zweiten stirnseitigen Ende des Ständerteils (5), wobei
- der erste Ständerwickelkopf (21') eine geschlossene Parallelverschaltung aller Ständerleiter (18) einer Wicklungsanordnung (16) einer Ständerwicklung aufweist, und
- der zweite Ständerwickelkopf (21'') eine offene Parallelverschaltung aller Ständerleiter (18) einer Wicklungsanordnung (16) der Ständerwicklung aufweist und Anschlüsse zur Leistungsabnahme aufweist.

2. Ständerteil (5) nach Anspruch 1,
**dadurch gekennzeichnet, dass**
der erste Ständerwickelkopf (21') in Form eines leitenden und geschlossenen Ringelements gebildet ist.

3. Ständerteil (5) nach Anspruch 1 oder 2,
**dadurch gekennzeichnet, dass**
der zweite Ständerwickelkopf (21'') in Form eines leitenden und offenen Ringsegments gebildet ist.

4. Ständerteil (5) nach einem der Ansprüche 1 bis 3,
**dadurch gekennzeichnet, dass**
die Anschlüsse zur Leistungsabnahme mit einer Zuleitung (24) zu einer Stromdurchführung (23) verbunden sind.

5. Turbogenerator (1) mit einem Gehäuse (3)
und einem in dem Gehäuse (3) angeordneten Ständerteil (5) nach einem der vorhergehenden Ansprüche sowie einem im Ständerteil (5) angeordneten Läufer (7).

6. Turbogenerator (1) nach Anspruch 5,
mit einem zwei-, vier- oder sechspoligen Läufer (7) und einer Drei-Phasen-Ständerwicklung.

7. Turbogenerator (1) nach Anspruch 6,
mit einem Ständerteil (5), bei dem jeder Wicklungsanordnung (16) jeweils ein erster und zweiter Ständerwickelkopf (21', 21'') zugeordnet ist.
